(19) Europäisches Patentamt
European Patent Office
Office européen des brevets

(11) Veröffentlichungsnummer : **0 025 143**
**B1**

(12) # EUROPÄISCHE PATENTSCHRIFT

(45) Veröffentlichungstag der Patentschrift : **26.01.83**

(51) Int. Cl.³ : **C 04 B 13/24**, C 08 G 8/28

(21) Anmeldenummer : **80104901.6**

(22) Anmeldetag : **16.08.80**

(54) **Mörtel aus anorganischen Bindemitteln, Verfahren zu ihrer Herstellung und ihre Verwendung.**

(30) Priorität : **04.09.79 DE 2935719**

(43) Veröffentlichungstag der Anmeldung : **18.03.81 Patentblatt 81/11**

(45) Bekanntmachung des Hinweises auf die Patenterteilung : **26.01.83 Patentblatt 83/04**

(84) Benannte Vertragsstaaten : **BE CH DE FR GB IT LI NL SE**

(56) Entgegenhaltungen :
**DE A 2 204 275**
**DE A 2 405 437**
**DE A 2 421 222**
**DE A 2 636 271**
**FR A 2 242 418**
**US A 3 870 681**

(73) Patentinhaber : **BAYER AG**
**Zentralbereich Patente, Marken und Lizenzen**
**D-5090 Leverkusen 1, Bayerwerk (DE)**

(72) Erfinder : **Schaupp, Kurt, Dr.**
**Leopold-Gmelin-Strasse 64**
**D-5000 Köln 80 (DE)**
Erfinder : **Reitz, Gunther, Dr.**
**Andreas-Gryphius-Strasse 20**
**D-5000 Köln 80 (DE)**
Erfinder : **Boehmke, Günther, Dr.**
**Kurt-Schumacher-Ring 152**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 025 143 B1

Jouve, 18, rue St-Denis, 75001 Paris, France

# Mörtel aus anorganischen Bindemitteln, Verfahren zu ihrer Herstellung und ihre Verwendung

Die vorliegende Erfindung betrifft mit alkylierten Phenolkondensaten modifizierte Mörtel mit einem Gehalt an anorganischen Bindemitteln, die ferner noch Zuschlagstoffe, Zusatzstoffe und/oder Zusatzmittel enthalten können.

Bei der Herstellung von Bauteilen, wie Estrichen, Wandplatten, Mauern, Decken usw. werden im allgemeinen anorganische Bindemittel, wie Anhydrit (natürlicher und synthetischer), Gips, Zement, teilweise ungemagert, in der Regel jedoch in Verbindung mit Zuschlagstoffen, wie Sand oder Kies, eventuell unter Verwendung von Zusatzmitteln, wie Luftporenbildnern oder Verflüssigern, angemischt und so verarbeitet. Um gute Eigenschaften der mit diesen Gemischen hergestellten Bauteile zu erhalten, muß darauf geachtet werden, daß mit einem geringen Wasser-Bindemittel-Faktor (WBF) gearbeitet wird, d.h. mit möglichst wenig Wasser, bezogen auf das eingesetzte Bindemittel. Dadurch wird der Mörtel jedoch häufig zähflüssig. Bei weiterer Herabsetzung des Wassergehaltes verliert er seine Plastizität und damit auch seine gute Verdichtbarkeit. Um aus einem solchen Mörtel hochwertige Bauteile herstellen zu können, ist ein intensives, mechanisches Verdichten durch Rütteln und/oder Pressen erforderlich. Da dies für viele Zwecke nicht möglich bzw. ausreichend ist, müssen oft erhöhte Bindemittelmengen eingesetzt werden, um die gewünschten Eigenschaften, wie hohe Festigkeiten, frühe Begehbarkeit oder frühe Entschalbarkeit, Dichtigkeit usw., zu erreichen.

Alle genannten Maßnahmen sind mit erhöhtem Aufwand und damit auch mit erhöhten Kosten verbunden. Auch können durch zu hohe Bindemittelanteile technische Schwierigkeiten auftreten. Oft wird deshalb auf diese Maßnahmen verzichtet und durch Erhöhung des WBF eine leichtere Verarbeitbarkeit des Mörtels erzwungen. Derart hergestellte Bauteile sind jedoch qualitativ nicht so hochwertig.

Deshalb wurde versucht, die Verarbeitungsfähigkeit von Mörteln durch chemische Zusätze zu verbessern. Es ist bekannt, sogenannte Verflüssiger für anorganische Bindemittel einzusetzen. Solche Verflüssiger werden dem Bindemittel meist in relativ geringen Mengen zugesetzt. Größere Zusatzmengen ergeben keine wesentliche Steigerung des Verflüssigungseffektes, jedoch fast durchweg eine erhebliche negative Beeinflussung der Eigenschaften des Mörtels, vor allem eine Minderung der Abbindegeschweindigkeit, Erhöhung des Luftporengehaltes und Senkung der Festigkeiten.

In der österreichischen Patentschrift 263 607 wird der Zusatz eines modifizierten Amino-S-Triazin-Harzes zu anorganischen Bindemitteln vorgeschlagen. Dieser Zusatz soll dem Baustoff gute Haft-, Zug- und Druckfestigkeiten und eine hohe Oberflächengüte verleihen.

In der DE-A-2 204 275 wird ein Phenol-Formaldehyd-Polykondensationsprodukt als Verflüssigungsmittel für Mörtel bzw. Beton auf Basis mineralischer Bindemittel beschrieben. Dieses Kondensationsprodukt ist am Kern sulfoniert und wird in einer Nachreaktion mit mehrwertigen Alkoholen über nicht umgesetzte Methylolgruppen verethert.

In der DE-A-2 405 437 werden Kondensationsprodukte von Formaldehyd mit Phenol, die Sulfo- und/oder Sulfomethylreste enthalten, wobei die sauren Wasserstoffatome durch Natrium, Kalium oder Calcium ersetzt sind, als Zusätze für keramische Massen und Beton beschrieben.

Weiterhin wird in der DE-A-2 421 222 ein Kondensationsprodukt von Formaldehyd mit mehrwertigen Phenolen, die am Kern sulfoniert sind, als Verflüssiger für Bindemittel beschrieben.

Die in den vorstehend genannten Schriften aufgeführten Verbindungen verzögern jedoch das Abbinden anorganischer, erdalkalihaltiger Bindemittel, wie z.B. Zement oder Calciumsulfat sehr stark. Jene Verbindungen, die unter diese Klasse fallen und die direkt am Kern sulfoniert sind, weisen außerdem mehr oder weniger stark tenside Eigenschaften auf, wodurch das Produkt in wäßriger Lösung zum Schäumen neigt und damit die Gefahr mit sich bringt, Luftporen in die Bindemittelmasse einzuführen, was zumindest für die meisten Einsatzmöglichkeiten nicht wünschenswert ist.

Es wurde nun gefunden, daß die genannten Nachteile nicht auftreten, wenn die Phenolgruppe verethert und die Sulfogruppe direkt oder bevorzugt über eine $CH_2$-Gruppe an den Kern gebunden ist.

Gegenstand der vorliegenden Verbindung sind daher mit alkylierten Phenolkondensationsprodukten modifizierte Mörtel mit einem Gehalt an anorganischen Bindemitteln und gegebenenfalls Zuschlagstoffen, Zusatzstoffen und/oder Zusatzmitteln, welche dadurch gekennzeichnet sind, daß die Mörtel, bezogen auf das eingesetzte Bindemittel, teilweise sulfonierte, bevorzugt teilweise sulfomethylierte Kondensate von Phenol oder Phenolderivaten mit Formaldehyd, bei denen die phenolische OH-Gruppe mit 0,6 bis 0,9 äquivalenten Alkylierungsmittel verethert ist, in Mengen von 0,05 bis 5 Gew.-% enthalten.

Ferner betrifft die vorliegende Erfindung ein Verfahren zur Herstellung von Mörteln, die anorganische Bindemittel, gegebenenfalls Zuschlagstoffe, Zusatzstoffe und/oder Zusatzmittel enthalten, das dadurch gekennzeichnet ist, daß den mit Wasser abbindenden Mörteln zumindest teilweise sulfonierte, bevorzugt sulfomethylierte Kondensate von Phenol oder Phenolderivaten, bei denen die phenolische OH-Gruppe mit 0,6 bis 0,9 äquivalenten Alkylierungsmitteln verethert ist, in Mengen von 0,05 bis 5 Gew.-%, bezogen auf das eingesetzte Bindemittel, zugemischt werden.

Unter anorganischen Bindemitteln im Sinne der vorliegenden Erfindung werden sowohl alle Gipse mit den verschiedenen Wassergehalten und in den verschiedenen Modifikationen (auch Anhydrit), Kalk und keramische Massen als auch Zement, der sowohl zu Mörteln als auch zu Beton verarbeitet werden

kann, verstanden.

Die genannten Verbindungen sind zumindest teilweise sulfonierte, bevorzugt teilweise sulfomethylierte Kondensate von Phenol oder Phenolderivaten, welche zum Teil oder vollständig an der phenolischen Hydroxylgruppe mit Alkylierungsmitteln verethert sind. Diese Kondensate werden nachfolgend als alkylierte Phenolkondensate bezeichnet.

Alkylierungsmittel sind Alkylhalogenide, z.B. Methylchlorid, Ethylchlorid, Benzylchlorid oder die entsprechenden Bromide oder Jodide, weiterhin Schwefelsäureester, wie Mono- und Dimethylsulfat, p-Toluolsulfonsäureester und Phosphorsäureester, wie z.B. Trimethyl- oder Triethyl-phosphat und Formaldehyd sowie Epichlorhydrin. Bevorzugt werden als Alkylierungsmittel Alkylenoxide, z.B. Ethylenoxid oder 1.2-Propylenoxid eingesetzt.

Die alkylierten Phenolkondensate enthalten bevorzugt folgende Strukturelemente (I) :

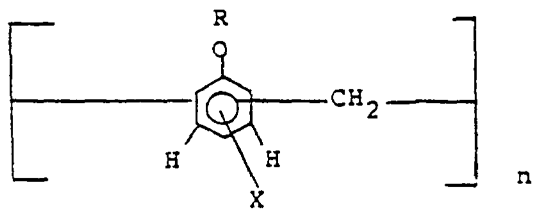

(I)

In dieser Formel haben die Buchstaben folgende Bedeutung :

R = H, $C_{1-6}$-Alkyl, $C_{1-12}$-Aralkyl, $C_{1-4}$-Mono- oder Dihydroxyalkyl, $C_{3-4}$-Hydroxy-chloralkyl, wobei von den Gruppen R weniger als 40 % gleich H sind ; R ist vorzugsweise 2-Hydroxy-alkyl, besonders bevorzugt 2-Hydroxy-ethyl.

X = H, $CH_2—SO_3M$ ; $CH_2—OH$, $CH_2—R'$

wobei M bedeutet :

Na, K, Ca/2, Mg/2, $NR'_4$ mit R' = H, $C_{1-4}$-Alkyl, $C_{2-4}$-Hydroxyalkyl, vorzugsweise Na, K, Ca/2, Mg/2. R' bedeutet ein weiteres Strukturelement I wobei von den Gruppen X nicht weniger als die Hälfte gleich $CH_2—SO_3M$ sind ;

n = Kondensationsgrad,

er ist mindestens 3, bevorzugt mindestens 8, normalerweise 10 bis 200.

Die Strukturelemente (I) sind Mittelgruppen der alkylierten Phenolkondensate, die Endgruppen weisen prinzipiell die gleiche Struktur auf, können jedoch noch zusätzlich durch H, ($CH_2—SO_3M$) oder Methylolgruppen substituiert sein. Die Mittelgruppen (I) sind nur zu geringem Anteil mit Methylolgruppen substituiert.

Die alkylierten Phenolkondensate werden folgendermaßen hergestellt :

In einem ersten Schritt werden Kondensate von sulfonierten oder sulfomethylierten Phenolen oder entsprechenden Phenolderivaten mit Formaldehyd hergestellt. Die sulfonierten Verbindungen gewinnt man z.B. durch Umsetzung von Phenol oder Phenolderivaten mit $H_2SO_4$, Chlorsulfonsäure, Oleum o.ä. Die sulfomethylierten Verbindungen sind Kondensate aus Phenol oder Phenolderivaten, Formaldehydspendern bzw. Formaldehyd und Sulfiten oder Bisulfiten, wobei in den Strukturelementen (I) R = H ist. Diese Kondensate werden dann in einem zweiten Reaktionsschritt in bevorzugt alkalischem Milieu mit o.g. Alkylierungsmitteln umgesetzt.

Als Phenole bzw. Phenolderivate werden Phenol selbst, weiterhin $C_{1-10}$-Alkylphenole, Chlorphenole, Bisphenole wie Bis-(hydroxyphenyl)-propan, Bis-(hydroxyphenyl)-sulfon, o- und p-Oxybisphenyl eingesetzt, vorzugsweise jedoch Phenol. Als Sulfite werden Natriummetabisulfit, bevorzugt $NaHSO_3$ oder $Na_2SO_3$, sowie Gemische beider eingesetzt. Die Sulfite können als Feststoffe oder in Form ihrer wäßrigen Lösungen eingesetzt werden. Von den Alkylierungsmitteln sind Methylchlorid, Ethylenoxid und 1,2-Propylenoxid bevorzugt, besonders bevorzugt ist Ethylenoxid. Bevorzugt ist ferner Formaldehyd in wäßriger 10 bis 40 %iger Lösung.

Die aus Phenolen, Formaldehyd und Sulfiten hergestellten Kondensate werden dann in wäßrigem Medium, bei pH 7 bis 13, mit den Alkylierungsmitteln, bevorzugt mit Ethylenoxid, zu den die Strukturelemente (I) enthaltenden alkylierten Phenolkondensaten umgesetzt. Die Umsetzung geschieht bei 20 bis 150 °C mit 0,7 bis 1,0 Mol Alkylierungsmittel pro Mol phenolischer Verbindung. Das Alkylierungsmittel reagiert bevorzugt mit der phenolischen Hydroxylgruppe, die auch als Phenolatgruppe vorliegen kann, zur entsprechenden Alkoxyverbindung. Dies läßt sich z.B. analytisch durch die UV-Spektren der Kondensate im alkalischen wäßrigen Medium vor und nach der Alkylierung nachweisen. Ein Teil des Alkylierungsmittels reagiert ebenfalls mit dem in der Reaktionsmischung vorhandenem Wasser bzw. Hydroxidanion. Der Grad der Veretherung ist also niedriger als der eingesetzten Menge an Alkylierungsmittel theoretisch entsprechen würde. Erfindungsgemäß werden Kondensate erhalten, bei denen die phenolische OH-Gruppe mit 0,6 bis 0,9 äquivalenten Alkylierungsmittel verethert ist.

Die so hergestellten alkylierten Phenolkondensate werden, bezogen auf das verwendete Bindemittel, in Mengen von 0,05 bis 5 Gew.-%, vorzugsweise von 0,1 bis 3 Gew.-%, besonders bevorzugt von 0,2 bis 2 Gew.-%, eingesetzt.

Die vorstehend beschriebenen, alkylierten Phenolkondensate zeigen eine sehr gute verflüssigende Wirkung, ohne die Abbindeeigenschaften insbesondere die Abbindezeit der anorganischen Bindemittel nachteilig zu beeinflussen, wie dies bei den nicht alkylierten Phenolkondensaten mit Formaldehyd der Fall ist. Andererseits weisen die erfindungsgemäßen Mörtel oder Bindemittel-Schlämme, denen die erfindungsgemäßen Produkte als Verflüssiger zugesetzt werden, kein schnelles Ansteifen auf. Ferner besitzen sie eine außerordentlich gute Aufschlußwirkung auf die Bindemittel. Dies drückt sich einerseits in der « fetten », sehr plastischen Konsistenz und andererseits in der sehr guten und stabilen Homogenität der damit hergestellten Betone und Mörtel aus.

Überraschenderweise hat der Zusatz der erfindungsgemäßen alkylierten Phenolkondensate keine tenside Wirkung, die den Alkylethern bzw. deren Polymeren sonst zu eigen ist. Eine solche Wirkung würde sich sehr deutlich in einer erheblichen Luftporeneinführung zeigen (vgl. Beispiel 4).

Mit dem Zusatz der alkylierten Phenolkondensate zu den anorganischen Bindemitteln werden Bauteile bzw. Formkörper erhalten, die sehr hohe Frühfestigkeiten aufweisen.

Ein wesentliches Merkmal der Erfindung ist die mit den Alkylierungsmitteln ausgeführte Veretherung der phenolischen OH-Gruppe, wobei die Menge der Veretherungsmoleküle pro Phenol-Einheit entscheidend ist. Es wurde gefunden, daß eine sehr gute Wirkung bei einer Umsetzung mit 0,7 bis 1,0 Mol Alkylierungsmittel pro Mol Phenolverbindung erreicht wird. Geringere Mengen beseitigen den Verzögerungseffekt nicht genügend, größere Mengen geben eine tenside Wirkung und führen damit zur Einführung von Luftporen bei der Mörtel- bzw. Betonverarbeitung und mindern den Verflüssigungseffekt. Erfindungsgemäß werden besonders gute Ergebnisse erhalten, wenn nicht alle phenolischen OH-Gruppen verethert sind, sondern 0,1-0,4 Äquivalente der Gesamtmenge nicht verethert vorliegen.

Eine besondere Eignung der erfindungsgemäßen Produkte zeigt sich bei den o.g. anorganischen Bindemitteln besonders auch bei der Verarbeitung keramischer Massen. Mit den alkylierten Phenolkondensaten lassen sich keramische Schlicker ausgezeichnet verflüssigen. Ferner weisen die verflüssigten Suspensionen ein hervorragendes Tragevermögen auf und zeigen bei den üblichen Standzeiten praktisch keine Absetzerscheinungen. Diese Ergebnisse waren überraschend, da ähnliche, nicht alkylierte Verbindungen zwar verflüssigend wirken, jedoch erhebliche Sedimentationen mit sich bringen, wodurch ein sinnvoller Einsatz eines solchen Produktes nicht möglich ist.

Die erfindungsgemäßen Mörtel können mit den üblichen, bekannten Zusatzmitteln, wie Verzögerern, Beschleunigern, Entschäumern, Schaummitteln, Dichtungsmitteln, hydrophobierenden Stoffen, Kunstharzdispersionen und deren Pulvern, Verflüssigern, Luftporenbildnern und Fließmitteln sowie den üblichen, bekannten Zuschlagstoffen, wie z.B. Sand, Kies, Gesteinsmehl, Flugasche, Perliten, Vermiculiten, Blähtonen, geschäumten oder geblähten Kunststoffen und Zusatzstoffen wie $FeSO_4 \cdot 7H_2O$, $Al_2(SO_4)_3 \cdot 18H_2O$, $KAl(SO_4)_2 \cdot 12H_2O$ etc. jeweils einzeln oder in beliebiger Kombination miteinander verarbeitet werden.

Bei dem erfindungsgemäßen Verfahren zur Herstellung der mit den alkylierten Phenolkondensaten modifizierten Mörteln können die vorstehend genannten Zusatzmittel und/oder Zuschlagstoffe sowohl den anorganischen Bindemitteln als auch der bereits mit alkylierten Phenolkondensaten versetzten wäßrigen Mischung zugegeben werden, eine andere Reihenfolge in der Vermischung der Bestandteile ist jedoch auch möglich. Bevorzugt ist die Zugabe der Verflüssiger zu den mit Wasser angemachten Mörteln.

Die vorstehend beschriebenen alkylierten Phenolkondensationsprodukte können bei der erfindungsgemäßen Verwendung als Fließmittel für anorganische Bindemittel (einschließlich keramischer Massen), insbesondere für Estriche, Betone und/oder Verfüllmassen, sehr breit eingesetzt werden. Im Gegensatz zu anderen vergleichbaren Produkten können die alkylierten Phenolkondensationsprodukte beispielsweise in sehr stabilen hochkonzentrierten wäßrigen Lösungen hergestellt werden, die außerdem bei relativ tiefen Temperaturen noch homogen flüssig sind. So ist auch eine 45 %ige wäßrige Lösung bei 0 °C noch homogen, gut gieß- und pumpbar und behält diese Eigenschaften noch bis zu − 5°C bei ; während vergleichbare Produkte mit freien, phenolischen OH-Gruppen bereits bei 0 °C zumindest teilweise auskristallisieren. Insbesondere bei der Lagerung, dem Versand bzw. der Verarbeitung der beschriebenen Kondensate in kälterer Umgebung ist dies Verhalten ein bedeutender Vorteil, da z.B. weniger Schwierigkeiten mit Fehldosierungen, Verstopfungen etc. auftreten. Vorteilhaft lassen sich die alkylierten Phenolkondensationsprodukte bei der Estrichverlegung verwenden. Die mit den alkylierten Phenolkondensationsprodukten als Verflüssiger hergestellten Mörtel bzw. Betone neigen nicht zum Bluten bzw. Absetzen und sind gut homogen herstellbar und verarbeitbar.

Das erfindungsgemäße Verfahren soll durch die folgenden Beispiele und Tabellen noch näher erläutert werden :

Beispiel 1 (Herstellung von Probe A)

376 g Phenol und 36 g 45 %ige Natronlauge wurden zusammen auf 80 °C erhitzt, dann 800 g 30 %ige Formaldehydlösung zugetropft. Nach vollständigem Zulaufen der Formaldehydlösung wurde 10 Minuten bei 80 bis 90 °C gerührt, dann wurden 1 040 g 40 %ige $NaHSO_4$-Lösung langsam zugegeben und anschließend 6 Stunden bei einer Temperatur von 140 °C gerührt. Danach wurde die Probe auf 30 % Festgehalt verdünnt.

Beispiel 2 (Herstellung von Probe B)

500 g einer nach Beispiel 1 hergestellten Probe wurden in einem Oxethylierungsautoklaven bei 80 °C 2 Stunden mit 32,5 g Ethylenoxid umgesetzt.

Bautechnische Untersuchungen

Als Grundmischung diente ein Beton aus 350 kg PZ 35 F/$m^3$ Beton, der mit einem Wasser-Zement-Faktor (WZF) von 0,56 unter Verwendung von Zuschlag 0 bis 16 mm hergestellt wurde. Der Nullbeton (ohne Zusätze) war auf ein Ausbreitmaß (nach DIN 1164) von 40 cm (nach dem Schocken) eingestellt worden. Die Vergrößerung des Ausbreitmaßes (ebenfalls in cm angegeben) bezieht sich auf diese Größe.

Als Zusatzmittel wurden eingesetzt :

A = Phenol polykondensiert mit Formaldehyd und über Methylolgruppen sulfoniert ;

B = wie A, jedoch phenolische OH-Gruppe zu 70-80 % mit Ethylenoxid verethert = erfindungsgemäßes Produkt ;

C = handelsübliches Fließmittel auf Basis von Ditolylether ;

D = handelsübliches Fließmittel auf Basis von Amino-s-triazin-Harz.

Die verflüssigende Wirkung wird in der Ausbreitmaßvergrößerung dargestellt.

Tabelle 1

| Ansatz | WZF | Ausbreitmaßvergrößerung (cm) |
|---|---|---|
| ohne Zusätze | 0,56 | 0 |
| 0,25 % A | 0,56 | 17 |
| 0,25 % B | 0,56 | 18 |
| 0,3 % C | 0,56 | 16,5 |
| 0,3 % D | 0,56 | 14,5 |

Die Beeinflussung der Abbindezeiten durch verschiedene Zusätze wurde zur besseren Demonstration an ungemagerten Proben ermittelt. Besonders deutlich tritt hierbei die außerordentlich starke Verzögerungswirkung der Probe A in Erscheinung.

Die Zusätze waren dem Anmachwasser zugegeben worden. Die Abbindezeiten wurden mit der Vicat-Nadel ermittelt.

Tabelle 2

Beeinflussung der Abbindezeiten durch Fließmittel

a) Zement (PZ 35 F)

| Ansatz | WBF | Abbindezeiten Anfang | / Ende |
|---|---|---|---|
| ohne Zusatz | 0,275 | 3 h 45 min | 4 h 5 min |
| + 0,75 % A | 0,275 | 14 h 30 min | 20 h 25 min |
| + 0,75 % B | 0,275 | 5 h 20 min | 7 h 50 min |

b) Anhydritbinder (AB 20)

| Ansatz | WBF | Anfang | Ende |
|---|---|---|---|
| ohne Zusatz | 0,275 | 4 h 5 min | 4 h 55 min |
| + 0,75 % A | 0,275 | Probe trocknet nur aus — kein Abbinden — | |
| + 0,75 % B | 0,275 | 6 h 15 min | 7 h 10 min |

In Tabelle 3 wird das einwandfreie Abbindeverhalten von Zement bei Zugabe des erfindungsgemäßen Produktes im Gegensatz zum nichtalkylierten Phenolkondensat A deutlich.

Die Prüfung wurde wie folgt durchgeführt :

In einem Kaloriemeter mit angeschlossenem Temperaturschreiber wurde eine, das Erstarrungsverhalten charakterisierende Thermokurve aufgenommen.

Deutlich ist bei dem vorbekannten Phenolprodukt A bei der Bestimmung der Abbindezeit nach Vicat das falsche Erstarren zu sehen, während andererseits die Thermokurve die echten Erstarrungszeiten aufzeigt. Im Gegensatz dazu zeigt das erfindungsgemäße Produkt B normales Abbindeverhalten.

Tabelle 3

Prüfung des Abbindeverhaltens PZ 45

| Probe | Abbindezeit nach Vicat (min.) Beginn / Ende | Thermokurve Beginn / Maximum (min.) |
|---|---|---|
| O | 180 / 275 | 180 / 380 |
| A | 15 / 30 | 480 / 760 |
| B | 290 / 335 | 240 / 465 |

Aus Tabelle 4 wird die stark verzögernde Wirkung der vorbekannten Phenolverbindung A im Gegensatz zu dem erfindungsgemäßen Produkt B anhand der Festigkeiten nach verschiedenen Zeiten deutlich. Daneben zeigt diese Tabelle die ausgezeichnete verflüssigende Wirkung des erfindungsgemäßen Produktes an einem Zementmörtel, der mit Sand der Körnung 0 bis 8 mm gemagert hergestellt wurde. Bemerkenswert sind hier auch die Festigkeiten, die trotz des stark verflüssigten Mörtels praktisch keine Minderung im Vergleich zum nicht verflüssigten O-Mörtel aufweisen.

Tabelle 4

Nullprobe : PZ 35 F 1 : 4 RT* mit Sand 0/8 mm gemagert

| Ansatz | WBF* | Ausbreit-maß | 18 Std. RG* | 18 Std. BZ* | 18 Std. DF* | 18 Std. % | 24 Std. BZ | 24 Std. DF | 24 Std. % | 3 Tage BZ | 3 Tage DF | 3 Tage % | 7 Tage BZ | 7 Tage DF | 7 Tage % | 28 Tage BZ | 28 Tage DF | 28 Tage % |
|---|---|---|---|---|---|---|---|---|---|---|---|---|---|---|---|---|---|---|
| Nullprobe | 0,57 | 10,0/13,5 | 2,30 | 0,98 | 4,15 | 100 | 3,57 | 15,1 | 100 | 5,60 | 31,0 | 100 | 6,42 | 37,5 | 100 | 6,71 | 48,4 | 100 |
| B | 0,57 | 10,0/16,5 | 2,33 | 0,85 | 3,92 | 90 | 4,30 | 17,3 | 117 | 5,40 | 30,3 | 97 | 6,50 | 38,3 | 102 | 7,08 | 46,7 | 101 |
| A | 0,57 | 10,0/16,0 | 2,34 | 0,31 | 1,15 | 34 | 3,40 | 16,0 | 100 | 5,17 | 31,6 | 97 | 6,22 | 39,9 | 101 | 7,87 | 49,9 | 110 |

* RT = Raumteile
WBF = Wasserbindemittelfaktor
RG = Raumgewicht (kg/l)
BZ = Biegezugfestigkeit } $(N/mm^2)$
DF = Druckfestigkeit }

Die positive Wirkung des erfindungsgemäßen Produktes zeigte sich auch beim Einsatz in Verbindung mit Gipsen. Trotz sehr guter Verflüssigung wurde auch hier noch eine Verbesserung der Festigkeiten erreicht.

Tabelle 5

Einfluß von Verflüssigern auf Fließfähigkeit, Abbindezeit und Festigkeiten bei Gips

| Probe | Ausbreitmaß (cm) | Abbindezeit Beginn | (min) Ende | Festigkeiten Biegezug | $(N/mm^2)$ Druck |
|---|---|---|---|---|---|
| O | 18,5 | 17 | 25 | 6,38 | 19,5 |
| A | 30 | 13 | 21 | 5,07 | 16,8 |
| B | 28 | 6 | 15 | 6,32 | 20,3 |

Eingesetzt wurde ein β-Gips.

Beispiel 3

Zur Ermittlung des Einflusses des Alkylierungsgrades auf Verflüssigung und Abbindezeiten wurden folgende Versuche gemacht :

500 g einer nach Beispiel 1 hergestellten Probe wurden in einem Ethoxylierungsautoklaven bei 80 °C mit

a) 16,8 g Ethylenoxid = 0,43 Mol pro Mol Phenol

b) 24,2 g Ethylenoxid = 0,62 Mol pro Mol Phenol
c) 31,2 g Ethylenoxid = 0,8 Mol pro Mol Phenol
d) 38,7 g Ethylenoxid = 0,99 Mol pro Mol Phenol
e) 46,9 g Ethylenoxid = 1,2 Mol pro Mol Phenol
f) 60,2 g Ethylenoxid = 1,54 Mol pro Mol Phenol
g) 78,2 g Ethylenoxid = 2,0 Mol pro Mol Phenol

umgesetzt.

Für die Wirksamkeitsprüfung ist die Bestimmung von Ausbreitmaß, Spurzeit und Abbindezeit bei Einsatz der Produkte für Anhydrit ein sehr guter Indikator. Darüber gibt die Tabelle 6 Auskunft.

1 kg Anhydrit und 250 g Wasser und 4 g der jeweils angegebenen Probe wurden intensiv vermischt, anschließend das Ausbreitmaß ermittelt und in einer Schale die Spurzeit sowie in einem Ring die Abbindezeit nach Vicat bestimmt. Als Spurzeit wurde dabei diejenige Zeit angegeben, die verging, bis eine in die Anmachmischung gezogene Spur nicht mehr verfließt.

Wie aus Tabelle 6 ersichtlich, sind die Produkte 3c) und 3d) besonders gut geeignet.

Bei gleichen Versuchen mit ungemagertem Zement erhält man ein ähnliches Ergebnis :

Tabelle 6

| | Ausbreitmaß cm | Spurzeit Min | Abbindezeit Std., Min |
|---|---|---|---|
| ohne Zusatz | 20,5 | 0 | 4 h 50′ |
| Beispiel 1 | 42,5 | 200 | unendlich |
| Beispiel 3a) | 42,5 | 190 | unendlich |
| 3b) | 41,5 | 180 | ca 36 h |
| 3c) | 41,0 | 100 | 12 h |
| 3d) | 38,5 | 45 | 7 h 50′ |
| 3e) | 34 | 17 | 7 h 10′ |
| 3f) | 28 | 7 | 7 h |
| 3g) | 26 | 4 | 6 h 50′ |

Bei einer Mischung von 1 kg Zement, 300 g Wasser und gegebenenfalls 5 g Verflüssiger zeigte sich folgendes :

Ohne Zusatz von Verflüssiger betrug das Ausbreitmaß 10 cm und die Abbindezeit 5 h. Bei Einsatz von Produkt gemäß Beispiel 1) also ohne Umsetzung mit Ethylenoxid, stieg das Ausbreitmaß auf 33 cm, jedoch war die Abbindezeit zu lang, nämlich 14 h. Mit Produkt gemäß Beispiel 3g), also nach Umsetzung mit 2 Mol Ethylenoxid pro Mol Phenol, ist das Ausbreitmaß mit nur noch 11,5 cm sehr gering, wenn auch die Abbindezeit mit 4 h 40 min gut ist. Am besten geeignet sind wieder die Produkte gemäß Beispiel 3c) und 3d), also mit 0,8 bzw. 0,99 Mol Ethylenoxid pro Mol Phenol umgesetzt, die ein hohes Ausbreitungsmaß von 30 cm ergaben und gleichzeitig eine gute Abbindezeit von 6,5 h, also nur wenig höher als die Probe ohne Zusatz von Verflüssiger.

## Beispiel 4

Dieses Beispiel demonstriert die hervorragenden Eigenschaften der erfindungsgemäßen Verflüssiger bezüglich Lufteintrag und dadurch verursachte unerwünschte Abnahme der Raumdichten.

800 g Zement, 4 kg Sand, 460 g Wasser und 4 g des unten angegebenen Verflüssigers wurden vermischt, in ein Meßgefäß mit geeichtem Volumen gebracht, kurz verdichtet und dann ausgewogen. Dabei ergaben sich folgende Dichten :

| | Dichte |
|---|---|
| ohne Zusatz | 2,261 |
| Beispiel 1) | 2,261 |
| Beispiel 3a) | 2,261 |
| Beispiel 3b) | 2,260 |
| Beispiel 3c) | 2,259 |
| Beispiel 3d) | 2,259 |
| Beispiel 3e) | 2,259 |
| Beispiel 3f) | 2,245 |
| Beispiel 3g) | 2,237 |

Die Raumdichten blieben bis Beispiel 3e) praktisch unverändert im Vergleich zur Mischung ohne Verflüssigerzusatz, so daß kein Lufteintrag erfolgte. Bei größerem Anteil des umgesetzten Ethylenoxids (Beispiel 3f und 3g) nahmen die Raumdichten deutlich ab, da Luft eingetragen wurde.

**Ansprüche**

1. Mit alkylierten Phenolkondensationsprodukten modifizierte Mörtel mit einem Gehalt an anorganischen Bindemitteln und gegebenenfalls Zuschlagstoffen, Zusatzstoffen und/oder Zusatzmitteln, dadurch gekennzeichnet daß die Mörtel, bezogen auf das eingesetzte Bindemittel, teilweise sulfonierte, bevorzugt teilweise sulfomethylierte Kondensate von Phenol oder Phenolderivaten mit Formaldehyd, bei denen die phenolische OH-Gruppe mit 0,6 bis 0,9 äquivalenten Alkylierungsmittel verethert ist, in Mengen von 0,05 bis 5 Gew.-% enthalten.

2. Mörtel gemäß Anspruch 1, dadurch gekennzeichnet, daß sie alkylierte Kondensationsprodukte aufweisen welche als Mittelgruppen Strukturelemente der Formel (I) enthalten

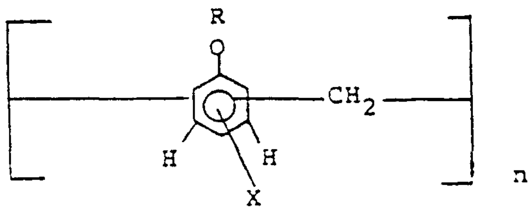

in der die Buchstaben folgende Bedeutung haben :

R = H, $C_{1-6}$-Alkyl, $C_{1-12}$-Aralkyl, $C_{1-4}$-Mono- oder Dihydroxyalkyl, $C_{3-4}$-Hydroxy-chloralkyl, wobei von den Gruppen R weniger als 40 % gleich H sind,

X = H, $CH_2—SO_3M$ ; $CH_2OH$, $CH_2—R'$

wobei M bedeutet :

Na, K, Ca/2, Mg/2, $NR'_4$ mit R' = H, $C_{1-4}$-Alkyl, $C_{2-4}$-Hydroxyalkyl,

R' bedeutet ein weiteres Strukturelement I wobei von den Gruppen X nicht weniger als die Hälfte gleich $CH_2—SO_3M$ sind

n = Kondensationsgrad, er ist mindestens 3, bevorzugt mindestens 8, normalerweise 10 bis 200.

3. Mörtel nach Anspruch 1 oder 2, dadurch gekennzeichnet, daß sie die alkylierten Phenolkondensationsprodukte in Mengen von 0,1-3 Gew.-%, bezogen auf eingesetztes Bindemittel, enthalten.

4. Mörtel, nach einem oder mehreren der Ansprüche 1 bis 3, dadurch gekennzeichnet, daß sie als Zusatzstoffe : $FeSO_4 \cdot 7H_2O$, $Al_2(SO_4)_3 \cdot 18H_2O$ und/oder $KAl(SO_4)_2 \cdot 12H_2O$,
als Zusatzmittel : Verflüssiger, Erstarrungsbeschleuniger, Verzögerer, Luftporenbildner, Verdünnungsmittel, Anreger und/oder Entschäumer
und als Zuschlagstoffe : Sand, Kies, Split, Perlit, Bims, geschäumte oder feste Kunststoffkörperchen und/oder Pigmente,
enthalten.

5. Verfahren zur Herstellung von Mörteln, die anorganische Bindemittel, gegebenenfalls Zuschlagstoffe, Zusatzstoffe und/oder Zusatzmittel enthalten, dadurch gekennzeichnet, daß den mit Wasser versetzten Mörteln teilweise sulfonierte, bevorzugt teilweise sulfomethylierte Kondensate von Phenol oder Phenolderivaten mit Formaldehyd, bei denen die phenolische OH-Gruppe mit 0,6 bis 0,9 Äquivalenten Alkylierungsmittel verethert ist, in Mengen von 0,05 bis 5 Gew.-%, bezogen auf das eingesetzte Bindemittel, zugemischt werden.

6. Verfahren nach Anspruch 5, dadurch gekennzeichnet, daß alkylierte Kondensationsprodukte, welche als Mittelgruppen Strukturelemente der Formel (I) enthalten

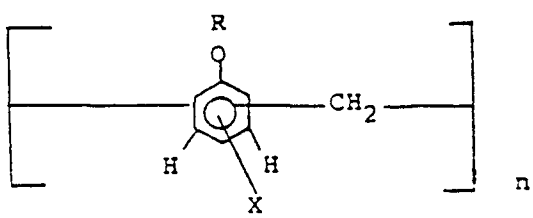

in der die Buchstaben folgende Bedeutung haben :

R = H, $C_{1-6}$-Alkyl, $C_{1-12}$-Aralkyl, $C_{1-4}$-Mono- oder Dihydroxyalkyl, $C_{3-4}$-Hydroxy-chloralkyl, wobei von den Gruppen R weniger als 40 % gleich H sind,

X = H, $CH_2—SO_3M$ ; $CH_2OH$, $CH_2—R'$

wobei M bedeutet :

Na, K, Ca/2, Mg/2, $NR'_4$ mit R' = H, $C_{1-4}$-Alkyl, $C_{2-4}$-Hydroxyalkyl,

R' bedeutet ein weiteres Strukturelement I wobei von den Gruppen X nicht weniger als die Hälfte gleich $CH_2—SO_3M$ sind

n = Kondensationsgrad, er ist mindestens 3, bevorzugt mindestens 8, normalerweise 10 bis 200, den mit Wasser versetzten Bindemitteln zugemischt werden.

7. Verwendung von alkylierten Phenolkondensationsprodukten, die als Mittelgruppen Strukturelemente der Formel (I) enthalten

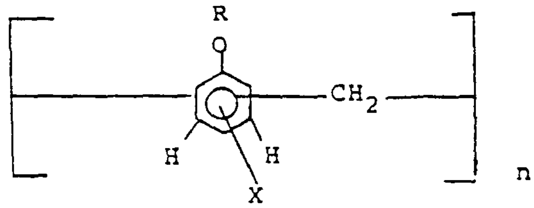

in der die Buchstaben folgende Bedeutung haben :

R = H, $C_{1-6}$-Alkyl, $C_{1-12}$-Aralkyl, $C_{1-4}$-Mono- oder Dihydroxyalkyl, $C_{3-4}$-Hydroxy-chloralkyl, wobei von den Gruppen R weniger als 40 % gleich H sind,

X = H, $CH_2$—$SO_3M$ ; $CH_2OH$, $CH_2$—R'

wobei M bedeutet :

Na, K, Ca/2, Mg/2, $NR'_4$ mit R' = H, $C_{1-4}$-Alkyl, $C_{2-4}$-Hydroxyalkyl,

R' bedeutet ein weiteres Strukturelement I wobei von den Gruppen X nicht weniger als die Hälfte gleich $CH_2$—$SO_3M$ sind

n = Kondensationsgrad, er ist mindestens 3, bevorzugt mindestens 8, normalerweise 10 bis 200, als Verflüssiger für anorganische Bindemittel.

8. Verwendung der Mörtel gemäß Anspruch 1 bis 4 für Estriche, Betone und/oder Verfüllmassen.

**Claims**

1. Mortars modified with alkylated phenol condensation products and containing inorganic binders and optionally aggregates, admixes and/or additives, characterised in that the mortars contain, based on the binder used, partly sulphonated, preferably partly sulphomethylated condensates of phenol or phenol derivatives with formaldehyde, in which the phenolic OH group is etherified with 0.6 to 0.9 equivalents of alkylating agent, in quantities of 0.05 to 5 % by weight.

2. Mortars according to Claim 1, characterised in that they contain alkylated condensation products which contain as middle groups structural elements of the formula (I)

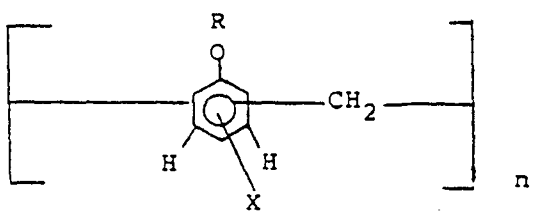

in which the letters have the following meaning :

R = H, $C_{1-6}$-alkyl, $C_{1-12}$-aralkyl, $C_{1-4}$-monohydroxy or dihydroxy alkyl, $C_{3-4}$-hydroxy chloroalkyl, less than 40 % of the R groups being H,

X = H, $CH_2$—$SO_3M$ ; $CH_2OH$, $CH_2$—R',

wherein

M denotes Na, K, Ca/2, Mg/2, $NR'_4$ with R' = H, $C_{1-4}$-alkyl or $C_{2-4}$-hydroxyalkyl and

R' denotes a further structural element I, no less than half of the groups X being $CH_2$—$SO_3M$ and

n = degree of condensation, it is at least 3, preferably at least 8 and normally 10 to 200.

3. Mortars according to Claim 1 or 2, characterised in that they contain the alkylated phenol condensation products in amounts of 0.1-3 % by weight, based on the binder used.

4. Mortars according to one or more of Claims 1 to 3, characterised in that they contain as admixes : $FeSO_4 \cdot 7H_2O$, $Al_2(SO_4)_3 \cdot 18H_2O$ and/or $KAl(SO_4)_2 \cdot 12H_2O$, as additives : plasticizers, hardening accelerators, retarders, air-entraining agents, diluents, activators and/or anti-foam agents, and as aggregates : sand, gravel, chippings, perlite, pumice, foamed plastic or solid plastic particles and/or pigments.

5. Process for the production of mortars which contain inorganic binders and optionally aggregates, admixes and/or additives, characterised in that partly sulphonated, preferably partly sulphomethylated condensates of phenol or phenol derivatives with formaldehyde, in which the phenolic OH group is etherified with 0.6 to 0.9 equivalents of alkylating agent, are added to the mortars mixed with water, in

quantities of 0.05 to 5 % by weight, based on the binder used.

6. Process according to Claim 5, characterised in that alkylated condensation products, which contain as middle groups structural elements of the formula (I)

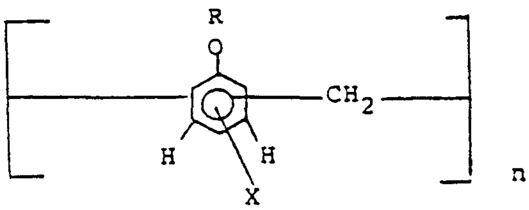

in which the letters have the following meaning :

R = H, $C_{1-6}$-alkyl, $C_{1-12}$-aralkyl, $C_{1-4}$-monohydroxy or dihydroxy alkyl, $C_{3-4}$-hydroxy chloroalkyl, less than 40 % of the R groups being H,

X = H, $CH_2$—$SO_3M$ ; $CH_2OH$, $CH_2$—R',

wherein

M denotes Na, K, Ca/2, Mg/2, $NR'_4$ with R' = H, $C_{1-4}$-alkyl or $C_{2-4}$-hydroxyalkyl and

R' denotes a further structural element I, no less than half of the groups X being $CH_2$—$SO_3M$ and

n = degree of condensation, it is at least 3, preferably at least 8 and normally 10 to 200,

are added to and mixed with the binders mixed with water.

7. Use of alkylated phenol condensation products which contain as middle groups structural elements of the formula (I)

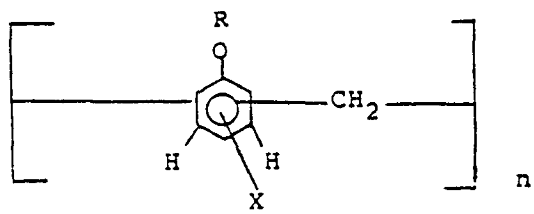

in which the letters have the following meaning :

R = H, $C_{1-6}$-alkyl, $C_{1-12}$-aralkyl, $C_{1-4}$-monohydroxy or dihydroxy alkyl, $C_{3-4}$-hydroxy chloroalkyl, less than 40 % of the R groups being H,

X = H, $CH_2$—$SO_3M$ ; $CH_2OH$, $CH_2$—R',

wherein

M denotes Na, K, Ca/2, Mg/2, $NR'_4$ with R' = H, $C_{1-4}$-alkyl or $C_{2-4}$-hydroxyalkyl and

R' denotes a further structural element I, no less than half of the groups X being $CH_2$—$SO_3M$ and

n = degree of condensation, it is at least 3, preferably at least 8 and normally 10 to 200,

as plasticizers for inorganic binders.

8. Use of the mortars according to Claim 1 to 4 for screeds, concretes and/or filling compositions.

**Revendications**

1. Mortiers modifiés avec des produits de condensation phénoliques alcoylés ayant une teneur en liants minéraux et éventuellement en substances d'agrégat, en matières additionnelles et/ou en additifs, caractérisés en ce que les mortiers, par rapport au liant employé, contiennent des condensats partiellement sulfonés, de préférence partiellement sulfométhylés, de phénol ou de dérivés phénoliques avec la formaldéhyde, dans lesquels le groupe OH phénolique est éthérifié avec 0,6 à 0,9 équivalent d'un agent d'alcoylation, en des quantités de 0,05 à 5 % en poids.

2. Mortiers selon la revendication 1, caractérisés en ce qu'ils présentent des produits de condensation alcoylés qui contiennent comme groupes centraux des éléments structuraux de formule (I)

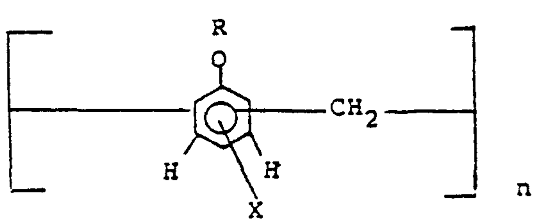

dans laquelle les lettres ont la signification suivante :

R = H, alcoyle en $C_{1-6}$, aralcoyle en $C_{1-12}$, mono- ou dihydroxyalcoyle en $C_{1-4}$, hydroxychloralcoyle en $C_{3-4}$, parmi les groupes R moins de 40 % étant des H,

X = H, $CH_2—SO_3M$, $CH_2OH$, $CH_2—R'$

où

M signifie Na, K, Ca/2, Mg/2, $NR'_4$ avec R' = H, alcoyle en $C_{1-4}$, hydroxyalcoyle en $C_{2-4}$,

R' signifie un autre élément structural I où parmi les groupes X, pas moins de la moitié sont des $CH_2—SO_3M$

n = degré de condensation, qui est d'au moins 3, de préférence d'au moins 8, normalement de 10 à 200.

3. Mortiers selon la revendication 1 ou 2, caractérisés en ce qu'ils contiennent les produits de condensation phénoliques alcoylés en des quantités de 0,1 à 3 % en poids par rapport à l'agent liant employé.

4. Mortiers selon l'une quelconque des revendications 1 à 3, caractérisés en ce qu'ils contiennent comme substances additionnelles : $FeSO_4 \cdot 7H_2O$, $Al_2(SO_4)_3 \cdot 18H_2O$, et/ou $KAl(SO_4)_2 \cdot 12H_2O$, comme additifs : des fluidifiants, des accélérateurs de solidification, des retardateurs, des formateurs de pores d'air, des diluants, des activateurs et/ou des agents anti-mousse et comme substances d'agrégat : du sable, du gravier, de la pierraille, de la perlite, de la pierre-ponce, des corpuscules de matière plastique mousseux ou pleins et/ou des pigments.

5. Procédé de fabrication de mortiers qui contiennent des liants minéraux et éventuellement des substances d'agrégat, des matières additionnelles et/ou des additifs, caractérisé en ce qu'on mélange aux mortiers additionnés d'eau des condensats partiellement sulfonés, de préférence partiellement sulfométhylés, de phénol ou de dérivés phénoliques avec la formaldéhyde, dans lesquels le groupe OH phénolique est éthérifié avec 0,6 à 0,9 équivalent d'un agent d'alcoylation, en des quantités de 0,05 à 5 % en poids par rapport au liant employé.

6. Procédé selon la revendication 5, caractérisé en ce que des produits de condensation alcoylés, qui contiennent comme groupes centraux des éléments structuraux de formule (I)

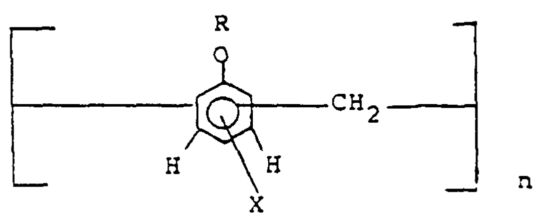

dans laquelle les lettres ont la signification suivante :

R = H, alcoyle en $C_{1-6}$, aralcoyle en $C_{1-12}$, mono- ou dihydroxyalcoyle en $C_{1-4}$, hydroxy-chloralcoyle en $C_{3-4}$, parmi les groupes R moins de 40 % étant des H,

X = H, $CH_2—SO_3M$, $CH_2OH$, $CH_2—R'$

où

M signifie Na, K, Ca/2, Mg/2, $NR'_4$ avec R' = H, alcoyle en $C_{1-4}$, hydroxyalcoyle en $C_{2-4}$,

R' signifie un autre élément structural I où, parmi les groupes X, pas moins de la moitié sont des $CH_2—SO_3M$,

n = degré de condensation qui est d'au moins 3, de préférence d'au moins 8, normalement de 10 à 200, sont mélangés aux liants additionnés d'eau.

7. Utilisation de produits de condensation phénoliques alcoylés, qui contiennent comme groupes centraux des éléments structuraux de formule (I)

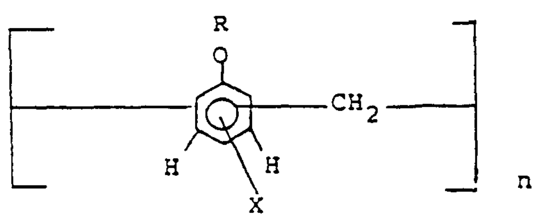

dans laquelle les lettres ont la signification suivante :

R = H, alcoyle en $C_{1-6}$, aralcoyle en $C_{1-12}$, mono- ou dihydroxyalcoyle en $C_{1-4}$, hydroxy-chloralcoyle en $C_{3-4}$, parmi les groupes R moins de 40 % étant des H,

X = H, $CH_2—SO_3M$, $CH_2OH$, $CH_2—R'$

où

M signifie Na, K, Ca/2, Mg/2, $NR'_4$ avec R' = H, alcoyle en $C_{1-4}$, hydroxyalcoyle en $C_{2-4}$,

R' signifie un autre élément structural I où, parmi les groupes X, pas moins de la moitié sont des $CH_2—SO_3M$,

n = degré de condensation, qui est d'au moins 3, de préférence d'au moins 8, normalement de 10 à 200, comme fluidifiants pour liants minéraux.

8. Utilisation des mortiers selon les revendications 1 à 4 pour des aires cimentées, des bétons et/ou des masses de remplissage.